(19) **Europäisches Patentamt**
**European Patent Office**
**Office européen des brevets**

(11) **EP 4 535 646 A1**

(12) **EUROPÄISCHE PATENTANMELDUNG**

(43) Veröffentlichungstag:
09.04.2025 Patentblatt 2025/15

(21) Anmeldenummer: 23202007.3

(22) Anmeldetag: 06.10.2023

(51) Internationale Patentklassifikation (IPC):
*H02P 21/00* [(2016.01)]    *B25F 5/02* [(2006.01)]

(52) Gemeinsame Patentklassifikation (CPC):
**H02P 21/0089; B23D 47/12; B23D 59/0064;**
**B25F 5/00; B28D 7/02;** B28D 1/041; B28D 1/045

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**KH MA MD TN**

(71) Anmelder: **Hilti Aktiengesellschaft**
**9494 Schaan (LI)**

(72) Erfinder:
• **Can, Hüseyin**
**86845 Großaitingen (DE)**
• **Hurka, Florian**
**86459 Margertshausen (DE)**

(74) Vertreter: **Hilti Aktiengesellschaft**
**Corporate Intellectual Property**
**Feldkircherstrasse 100**
**Postfach 333**
**9494 Schaan (LI)**

(54) **VERFAHREN ZUR DREHZAHLSPREIZUNG IN EINEM ELEKTRISCHEN GERÄT UND ELEKTRISCHES GERÄT**

(57)    Die vorliegende Erfindung betrifft ein Verfahren, um in einem elektrischen Gerät, das einen Motor aufweist, eine große Bandbreite von Drehzahlen bereitzustellen. Bei dem vorgeschlagenen Verfahren wird das elektrische Gerät in einem ersten Drehzahlbereich betrieben, wobei der Motor von einem elektrischen Strom I durchflossen wird. Der elektrische Strom I kann ein Magnetfeld B erzeugen. Der Motor des elektrischen Geräts weist einen ersten magnetischen Pol mit einer ersten Polung auf, wobei im Rahmen des Verfahrens ein zweiter magnetischer Pol mit einer zweiten Polung in räumlicher Nähe des ersten magnetischen Pols erzeugt wird. Die erste Polung und die zweite Polung sind dabei gleich. Durch die Erzeugung und die Anordnung des zweiten magnetischen Pols kommt es zu einer Schwächung des Magnetfelds B, wodurch das elektrische Gerät in einem zweiten Drehzahlbereich betrieben werden kann. In einem zweiten Aspekt betrifft die Erfindung ein elektrisches Gerät zur Durchführung des Verfahrens. Das elektrische Gerät kann eine Werkzeugmaschine oder ein Sauggerät, wie ein Staubsauger, sein.

Fig. 1

EP 4 535 646 A1

**Beschreibung**

Die vorliegende Erfindung betrifft ein Verfahren, um in einem elektrischen Gerät, das einen Motor aufweist, eine große Bandbreite von Drehzahlen bereitzustellen. Bei dem vorgeschlagenen Verfahren wird das elektrische Gerät in einem ersten Drehzahlbereich betrieben, wobei der Motor von einem elektrischen Strom I durchflossen wird. Der elektrische Strom I kann ein Magnetfeld B erzeugen und eine Flußstromkomponente $I\_d$ und eine momentbildende Komponente $I\_q$ aufweisen. Der Motor des elektrischen Geräts weist einen ersten magnetischen Pol mit einer ersten Polung auf, wobei im Rahmen des Verfahrens ein zweiter magnetischer Pol mit einer zweiten Polung in räumlicher Nähe des ersten magnetischen Pols erzeugt wird. Die erste Polung und die zweite Polung sind dabei gleich. Durch die Erzeugung und die Anordnung des zweiten magnetischen Pols kommt es zu einer Schwächung des Magnetfelds B, wodurch das elektrische Gerät in einem zweiten Drehzahlbereich betrieben werden kann. Der zweite Drehzahlbereich kann im Schnitt mit höheren Drehzahlen verbunden sein als der erste Drehzahlbereich. Es ist im Sinne der Erfindung ganz besonders bevorzugt, dass der zweite Drehzahlbereich einen größeren Bereich an Drehzahlen abdeckt als der erste Drehzahlbereich. In einem zweiten Aspekt betrifft die Erfindung ein elektrisches Gerät zur Durchführung des Verfahrens. Das elektrische Gerät kann eine Werkzeugmaschine oder ein Sauggerät, wie ein Staubsauger, sein.

**Hintergrund der Erfindung:**

Um im Alltag verschiedene Aufgaben zu erfüllen, sollen elektrische Geräte nicht nur mit einer konstanten Drehzahl des Motors betrieben werden können, sondern es besteht häufig der Wunsch, dass ein elektrisches Gerät einen gewissen, aufgabenabhängigen Drehzahlbereich abdeckt. Wenn dieser Drehzahlbereich sehr groß wird, kann es vorkommen, dass ein elektrisches Gerät nicht in der Lage ist, den gesamten gewünschten Drehzahlbereich abzudecken. Um hier Abhilfe zu schaffen und auch breitere Drehzahlbereiche anbieten zu können, sind im Stand der Technik Getriebe vorgeschlagen worden. Dabei können einzelne Getriebestufen oder "Gänge" vorgesehen sein, die mit unterschiedlichen Drehzahlbereiche assoziiert sind.

Die Vorsehung eines Getriebes an einem elektrischen Gerät kann aber mit dem Nachteil verbunden sein, dass der Aufbau und die Herstellung des elektrischen Geräts durch das Getriebe aufwändiger und komplizierter werden, dies gerade dann, wenn ein Getriebe mit einer Vielzahl von Gängen oder Getriebestufen vorgesehen ist. Darüber hinaus kann ein Getriebe einen großen Raum- oder Volumenbedarf haben, so dass das elektrische Gerät dadurch sehr groß und unhandlich wird.

Es besteht daher ein Bedarf nach alternativen Lösungen, um in elektrischen Geräten einen breiten Drehzahlbereich breitstellen zu können, ohne dass ein Getriebe oder ein Getriebe mit einer großen Anzahl von Getriebestufen oder Gängen verwendet werden muss. Darüber hinaus würde die Fachwelt eine Erweiterung der möglichen Drehzahlen bei einem elektrischen Gerät hin zu hohen Drehzahlen, die beispielsweise im Bereich von 10.000 bis 20.000 Umdrehungen pro Minute liegen, begrüßen. Durch eine solche Erweiterung der möglichen Drehzahlen in Richtung von besonders hohen Drehzahlen können neue oder erweiterte Funktionalitäten der elektrischen Geräte bereitgestellt werden oder es können neue Anwendungen oder Aufgaben erledigt werden.

Die Aufgabe, die der vorliegenden Erfindung zugrunde liegt, besteht darin, die vorstehend beschriebenen Mängel und Nachteile des Standes der Technik zu überwinden und ein Verfahren bereitzustellen, mit denen in einem elektrischen Gerät eine große Bandbreite von Drehzahlen ermöglicht werden kann. Dabei soll an dem elektrischen Gerät insbesondere auf ein Getriebe verzichtet werden oder - bei vorhandenem Getriebe - die Anzahl der Getriebestufen reduziert werden. Darüber hinaus wäre es wünschenswert, wenn der Motor des bereitzustellenden elektrischen Geräts insbesondere auch höhere Drehzahlen, beispielswese in einem Bereich von 10.000 bis 20.000 Umdrehungen pro Minute erreichen könnte.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

**Beschreibung der Erfindung:**

Erfindungsgemäß ist ein Verfahren vorgesehen, um in einem elektrischen Gerät, das einen Motor aufweist, eine große Bandbreite von Drehzahlen bereitzustellen. Bei dem vorgeschlagenen Verfahren wird das elektrische Gerät in einem ersten Drehzahlbereich betrieben, wobei der Motor von einem elektrischen Strom I durchflossen wird. Der elektrische Strom I kann ein Magnetfeld B erzeugen. Der Motor des elektrischen Geräts weist einen ersten magnetischen Pol mit einer ersten Polung auf, wobei im Rahmen des Verfahrens ein zweiter magnetischer Pol mit einer zweiten Polung in räumlicher Nähe des ersten magnetischen Pols erzeugt wird. Die erste Polung und die zweite Polung sind dabei gleich, d.h. beispielsweise sind beide magnetischen Pole Südpole oder beide magnetischen Pole sind Nordpole. Durch die Erzeugung und die Anordnung des zweiten magnetischen Pols kommt es zu einer Schwächung des Magnetfelds B, wodurch das elektrische Gerät in einem zweiten Drehzahlbereich betrieben werden kann. Es ist im Sinne der Erfindung bevorzugt, dass der erste Drehzahlbereich durch die Erfindung erweitert werden kann.

Es kann im Sinne der Erfindung auch bevorzugt sein, dass der zweite Drehzahlbereich einen breiteren Bereich von Drehzahlen abdeckt als der erste Drehzahlbereich.

Das vorgeschlagene Verfahren ist insbesondere durch die folgenden Verfahrensschritte gekennzeichnet:

a) Betrieb des elektrischen Geräts in einem ersten Drehzahlbereich, wobei der Motor von einem elektrischen Strom I durchflossen wird, wobei der elektrische Strom I ein Magnetfeld B erzeugen kann,

b) Erzeugung eines zweiten magnetischen Pols mit einer zweiten Polung in räumlicher Nähe eines ersten magnetischen Pols mit einer ersten Polung im Motor des elektrischen Geräts, wobei die erste Polung und die zweite Polung gleich sind,

c) Schwächung des Magnetfelds B durch den zweiten magnetischen Pol, wodurch das elektrische Gerät in einem zweiten Drehzahlbereich betrieben kann.

Das elektrische Gerät kann beispielsweise eine Werkzeugmaschine oder ein Sauggerät, wie ein Staubsauger oder ein Entstauber, sein. Bei der Werkzeugmaschine kann es sich um Bohrmaschinen, Bohrhämmer, Meißelhämmer, Trenn- oder Winkelschleifer oder Kernbohrgeräte, ohne jedoch darauf beschränkt zu sein. Werkzeugmaschinen weisen in der Regel ein Werkzeug auf, mit dem ein Untergrund oder ein Werkstück bearbeitet werden kann. Typische Werkzeuge sind Bohr-Bits, Trennscheiben, Bohrkronen oder dergleichen. Wenn das elektrische Gerät ein Sauggerät ist, kann eine Turbine des Sauggeräts als Werkzeug des Sauggeräts betrachtet werden. Die Turbine des Sauggeräts ist vorzugsweise dazu eingerichtet, in dem Sauggerät einen Unterdruck zu erzeugen, um Staub oder Partikel, die beispielsweise bei der Arbeit mit einer Werkzeugmaschine entstehen, einzusaugen. Es ist im Sinne der Erfindung bevorzugt, dass ein Werkzeug der Werkzeugmaschine oder eine Turbine des Sauggeräts dadurch angetrieben werden, dass der Motor des elektrischen Geräts dadurch eine Drehbewegung erzeugt, dass der Motor von einem elektrischen Strom I durchflossen wird. Dabei kann der der elektrische Strom eine Flußstromkomponente $I\_d$ und eine momentbildende Komponente $I\_q$ aufweisen. Vorzugsweise kann der Motor des elektrischen Geräts dazu eingerichtet sein, eine Drehbewegung zu erzeugen, so dass der Motor von einem elektrischen Strom I durchflossen wird.
Der Motor des elektrischen Geräts weist einen ersten magnetischen Pol mit einer ersten Polung auf, wobei im Rahmen des Verfahrens ein zweiter magnetischer Pol mit einer zweiten Polung in räumlicher Nähe des ersten magnetischen Pols erzeugt wird. Der Motor des elektrischen Geräts kann einen sich drehenden Rotor und einen Stator umfassen, wobei insbesondere der Rotor des Motors einen Nordpol aufweisen kann («Rotor-Nordpol»). Dieser Rotor-Nordpol kann im Sinne der Erfindung den ersten magnetischen Pol darstellen, wobei die erste Polung dieses ersten magnetischen Pols ein Nordpol sein kann. Wenn der erste magnetische Pol ein Nordpol ist, ist der zweite magnetische Pol ebenfalls ein Nordpol, der vorzugsweise genau vor dem Magnet-Nordpol des Rotors entsteht, und zwar von den Spulen des Stators kommend. Dadurch, dass die Polungen der magnetischen Pole gleich sind, kommt es zu einer Abstoßung zwischen den Polen und der Stator-Nordpol drückt einen Teil des Rotor-Nordpols weg. Das bedeutet im Sinne der Erfindung bevorzugt, dass der Stator-Pol das Feld des Rotor-Pols schwächt. Vorzugsweise wird dadurch eine Fluß- oder Feldschwächung erreicht, wobei insbesondere ein Gegenfeld gegen den Rotor-Pol aufgebaut wird. Es ist im Sinne der Erfindung bevorzugt, dass durch diese Fluß- oder Feldschwächung nicht nur der Nord-Pol, sondern auch der Süd-Pol in analoger Weise geschwächt werden kann.
Dadurch wird das magnetische Verhalten des Rotor-Nordpols verändert und insbesondere das Magnetfelds B, das durch den elektrischen Strom I erzeugt wird, abgeschwächt. Eine Schwächung des Magnetfelds B, die im Sinne der Erfindung bevorzugt auch als Feldschwächung bezeichnet wird, führt dazu, dass mit dem elektrischen Gerät eine größere Bandbreite von Drehzahlen erreicht werden kann. Das bedeutet im Sinne der Erfindung bevorzugt, dass der Motor des elektrischen Geräts mit einer größeren Bandbreite von Drehzahlen drehen kann. Mit anderen Worten kann das elektrische Gerät bzw. sein Motor einen größeren Bereich von Drehzahlen abgedeckt werden. Dieser größere Bereich von Drehzahlen wird im Sinne der Erfindung bevorzugt als «zweiter Drehzahlbereich» bezeichnet, wobei der zweite Drehzahlbereich im Schnitt mit höheren Drehzahlen verbunden ist als der erste Drehzahlbereich. Das bedeutet im Sinne der Erfindung bevorzugt, dass die größere Bandbreite der Drehzahlen, die von dem elektrischen Gerät abgedeckt werden kann, dazu führt, dass insbesondere höheren Drehzahlen erreicht werden können. Mithin kann die Bandbreite an Drehzahlen bzw. ihr Mittelwert zu höheren Drehzahlen hin verschoben sein. Dieser Vorteil der Erfindung kann vorzugsweise dadurch beschrieben werden, dass der zweite Drehzahlbereich, der nach der Abschwächung des Magnetfelds B erreicht werden kann, im Schnitt mit höheren Drehzahlen verbunden ist als der erste Drehzahlbereich, der vor der Feldschwächung von dem Motor des elektrischen Geräts erreicht wird. Es ist im Sinne der Erfindung ganz besonders bevorzugt, dass der zweite Drehzahlbereich «breiter» ist als der erste Drehzahlbereich. Somit kann nach der Feldschwächung ein größerer Bereich von Drehzahlen von dem elektrischen Gerät abgedeckt werden. Auf diese Weise kann der Motor des elektrischen Geräts mit einer größeren Bandbreite an Geschwindigkeiten rotieren, so dass das elektrische Gerät flexibel eingesetzt werden kann und sich für die Durchführung von vielen Anwendungen und Funktionen eignet. Insbesondere kann das elektrische Gerät ein Staubsauger oder ein Gerät zur Bereitstellung von Flüssigkeit auf einer Baustelle sein, dessen Turbine häufig von vergleichsweise hohen Drehzahlen angetrieben wird. Alternativ kann es sich bei dem elektrischen Gerät auch um eine Werkzeugmaschine handeln, die für kurze Zeit mit besonders hohen Drehzahlen betrieben werden kann, um eine besonders herausfordernde Aufgabe zu erledigen («Boost-Funktion»).

Mit der Erfindung ist es vorteilhafterweise möglich, eine größere Bandbreite an Drehzahlen bereitzustellen als bei konventionellen elektrischen Geräten, wie sie aus dem Stand der Technik bekannt sind. Ein wesentlicher Vorteil der Erfindung besteht darin, dass diese überraschend große Bandbreite an Drehzahlen bereitgestellt werden kann, ohne dass dabei eine zwei oder mehr Getriebestufen bereitgestellt werden müssen. Mit anderen Worten: das vorgeschlagene elektrische Gerät kommt mit einer überraschend geringen Zahl an Getriebestufen aus und ist dennoch in der Lage, in einem sehr großen Drehzahlbereich betrieben zu werden. Dieser große Drehzahlbereich kann im Sinne der Erfindung vorzugsweise auch als «breiter Drehzahlbereich» bezeichnet werden, wobei die Bereitstellung eines großen Drehzahlbereichs im Kontext der vorliegenden Erfindung bevorzugt auch als «Drehzahlspreizung» bezeichnet wird. Das bedeutet, dass mit der Erfindung vorteilhafterweise ein Betriebsverfahren für ein elektrisches Gerät bereitgestellt werden kann, mit dem der Drehzahlbereich des Motors des elektrischen Geräts auf eine überraschende Breite aufgespreizt werden kann. Vorzugsweise kann das Verfahren zur Bereitstellung einer großen Bandbreite von Drehzahlen in einem elektrischen Gerät auch als Verfahren zur Drehzahlspreizung in einem elektrischen Gerät bezeichnet werden. Die Drehzahlspreizung kommt insbesondere in der Formulierung «zweiter Drehzahlbereich» zum Ausdruck, wobei der zweite Drehzahlbereich beispielsweise mit durchschnittlich höheren Drehzahlen verbunden sein kann als der erste Drehzahlbereich. Alternativ oder ergänzend kann der zweite Drehzahlbereich einen größeren Bereich an Drehzahlen abdecken als der erste Drehzahlbereich.

Die Erfindung kann beispielsweise in solchen elektrischen Geräten zum Einsatz kommen, die als Staubsauger, Saugvorrichtung oder als Entstauber ausgebildet sind. In solchen elektrischen Geräten sind vor allem hohe Drehzahlen bevorzugt, um einen starken Unterdruck zum Einsaugen von Staub oder Partikeln zu erzeugen. Hier hilft die Erfindung, indem der Drehzahlbereich des Motors des elektrischen Geräts insbesondere in den Bereich der vergleichsweise hohen Drehzahlen erweitert werden kann. Beispielsweise können mit der Erfindung Drehzahlen von bis zu 21.000 Umdrehungen pro Minute erreicht werden. Mit einem Motor, der in einem solchen Drehzahlbereich betrieben wird, kann beispielsweise die Turbine eines Sauggeräts angetrieben werden, um einen Unterdruck zu erzeugen.

Das elektrische Gerät kann allerdings auch als Werkzeugmaschine ausgebildet sein. Werkzeugmaschine sind beispielsweise Bohrmaschinen, Bohrhämmer, Meißelhämmer, Trenn- oder Winkelschleifer oder Kernbohrgeräte, ohne jedoch darauf beschränkt zu sein. Es hat sich gezeigt, dass mit der Erfindung eine Boost-Funktion bereitgestellt werden kann, mit der beispielsweise Bewehrungsstangen oder Rohre in einem zu bearbeitenden Beton-Untergrund durchtrennt werden können. Im Rahmen der Boost-Funktion kann die Werkzeugmaschine bzw. ihr Motor für eine kurze Zeitspanne mit einer besonders hohen Drehzahl betrieben werden. Diese besonders hohe Drehzahl ermöglicht es dann, Metallkomponenten, die als sog. Eisentreffer in einem Beton-Untergrund enthalten sein können, zu durchtrennen. Es ist im Sinne der Erfindung bevorzugt, dass es die Drehzahlspreizung ermöglicht, eine Boost-Funktion zum Durchtrennen möglicher Metall-Bestandteile in einem zu bearbeitenden Beton-Untergrund zu durchtrennen. In dieser Ausführungsform der Erfindung kann das elektrische Gerät als Werkzeugmaschine und insbesondere als Kernbohrgerät ausgebildet sein. Das Werkzeug der Werkzeugmaschine kann dann vorzugsweise eine Bohrkrone sein. Vorteilhafterweise ermöglicht es die Erfindung - insbesondere kurzfristig - vergleichsweise hohe Drehzahlen bereitzustellen. Auf diese Weise können unterschiedliche Applikationen, die auf hohe Drehzahlen angewiesen sind, besonders gut von dem vorgeschlagenen elektrischen Gerät erledigt werden.

Mit der Erfindung ist es vorteilhafterweise möglich, ein elektrisches Gerät mit maximal einer Getriebestufe bereitzustellen, welches dennoch in der Lage ist, einen breiten Bereich an Drehzahlen abzudecken. Es ist im Sinne der Erfindung bevorzugt, dass das elektrische Gerät kein Getriebe oder ein Getriebe mit maximal einer Getriebestufe aufweist. Dabei können mit Hilfe der sog. Feldschwächung insbesondere auch solche Drehzahlbereiche erreicht werden, die mit einer konventionellen Kommutierung des Motors des elektrischen Geräts nicht erreichbar sind, wenn das elektrische Gerät im Regelregime des optimalen MTPA-Winkels betrieben wird (MTPA = Maximum Torque Per Ampere). Es ist im Sinne der Erfindung bevorzugt, dass der Winkel beta von den Stromkomponenten $I\_d$ und $I\_q$ eingestellt werden kann. Der MTPA-Winkel ist vorzugsweise der optimale Winkel beta, bei dem ein maximales Moment bei einem Strom x abgegeben wird. Es ist im Sinne der Erfindung bevorzugt, dass es für jeden Statorstrom einen optimalen Winkel beta, d.h. einen MTPA-Winkel, gibt.

Die große Bandbreite an Drehzahlen kann insbesondere durch eine Elektronik des elektrischen Geräts bereitgestellt werden, mit der der elektrische Strom I in einer Rotormagnetisierungsachse so manipuliert werden kann, dass das Magnetfeld B geschwächt wird und dadurch höhere Drehzahlen ermöglicht werden. Mit anderen Worten kann die Elektronik des elektrischen Geräts dazu eingerichtet sein, insbesondere die Stromkomponente entlang der d-Achse («Flußstromkomponente $I\_d$») in einer Raumzeiger-Darstellung zu beeinflussen, so dass durch diese Beeinflussung das Magnetfled B des Rotors des Motors des elektrischen Geräts abgeschwächt wird und ein größerer Bereich an Drehzahlen bereitgestellt werden kann. Die «d-Achse» in einer Raumzeiger-Darstellung kann im Sinne der Erfindung bevorzugt auch als «Rotormagnetisierungsachse» bezeichnet werden. Konventionelle elektrische Geräte werden in der Regel auf ihrer MTPA-Linie betrieben, auf der die elektrischen Geräte ein maximales Drehmoment pro Ampere (Maximum Torque Per Ampere = MTPA) erreichen. Allerdings hat es sich gezeigt, dass - wenn ein elektrisches Gerät gemäß dem MTPA-Regelschema betrieben wird - nur ein schmaler oder enger Bereich von Drehzahlen zugänglich ist. Diesen Nachteil überwindet die Erfindung durch die Erzeugung des zweiten magnetischen Pols in räumlicher Nähe zu dem ersten magnetischen Pol und durch die dadurch bewirkte Abschwächung des Magnetfelds B.

Die Schwächung des Magnetfelds B des Motors des elektrischen Geräts wird im Sinne der Erfindung bevorzugt als «Feldschwächung» oder «flux weakening» bezeichnet. Die Feldschwächung wird im Kontext der vorliegenden Erfindung vorzugsweise durch den Aufbau des zweiten magnetischen Pols in direkter räumlicher Nähe zum ersten Pol erzeugt, wobei die Polungen der beiden Pole gleich sind. Die Vorsehung des zweiten magnetischen Pols in dem Motor des elektrischen Geräts ist vergleichbar mit dem Auswechseln eines magnetischen Materials in einem Permanentmagneten. Wird ein solcher Permanentmagnet mit - beispielsweise - einem schwächeren magnetischen Material - bei gleicher Motorgeometrie und gleicher Ansteuerung und Spannung - verwendet, um einen elektrischen Motor zu betreiben, so wird sich die Leerlaufdrehzahl eines solchen Motors in der Regel erhöhen. Ein solches Auswechseln des magnetischen Materials ist im Betrieb eines elektrischen Geräts selbstverständlich nicht möglich. Hier bietet nun die Erfindung eine alternative Möglichkeit, das Magnetfeld B innerhalb des Motors des elektrischen Geräts bei Betrieb des elektrischen Geräts abzuschwächen, um die Bandbreite der möglichen Drehzahlen für den Nutzer des elektrischen Geräts zu erhöhen. Mit anderen Worten kann die Erfindung ein alternatives Verfahren zur Durchführung einer Feldschwächung in einem elektrischen Gerät bereitstellen oder ein Betriebsverfahren für eine elektrisches Gerät, in dem mit Feldschwächung die Bandbreite der zur Verfügung stehenden Drehzahlen erhöht werden kann. Das vorgeschlagene Verfahren ermöglicht es insbesondere, in einem elektrischen Gerät, das einen elektrischen Motor aufweist, eine große Bandbreite von Drehzahlen bereitzustellen; mithin stellt die Erfindung ein Verfahren zur Bereitstellung einer größeren Bandbreite von Drehzahlen oder von Drehzahlbereichen dar. Dadurch kann bei Abdeckung eines großen Drehzahlbereiches die Vorsehung eines Getriebes eingespart werden oder bei vorhandenem Getriebe auf zusätzliche Getriebestufen verzichtet werden. Auf diese Weise kann eine kompakte, handlich und leicht zu führende Werkzeugmaschine bereitgestellt werden oder ein kompakter und leicht zu transportierender Staubsauger.

Es ist im Sinne der Erfindung bevorzugt, dass der Motor des elektrischen Geräts einen drehenden Rotor und einen Stator umfasst. Vorzugsweise kann ein Teil des Magnetfelds des Stators des Motors des elektrischen Geräts so eingestellt werden, dass genau vor dem Magnet-Nordpol des Rotors des Motors des elektrischen Geräts ein Nordpol entsteht, wobei dieser Nordpol von den Spulen des Stators kommt, also auf der Statorseite, angeordnet ist. Aufgrund der gleichen Polung des ersten und des zweiten magnetischen Pols kommt es zu einer Abstoßung zwischen den beiden Polen, so dass der Stator-Nordpol einen Teil des Rotor-Nordpols «wegdrückt». Auf diese Weise wird der Rotor-Nordpol geschwächt - analog zu einem Austausch eines magnetischen Materials eines Permanentmagneten von einem stärkerem zu einem schwächeren magnetischen Material. Die Abschwächung des Rotor-Nordpol führt zu einer Schwächung des Magnetfelds B des Motors des elektrischen Geräts, so dass als Folge höhere Drehzahlen bzw. eine größere Bandbreite an Drehzahlen mit dem Motor erreicht werden können.

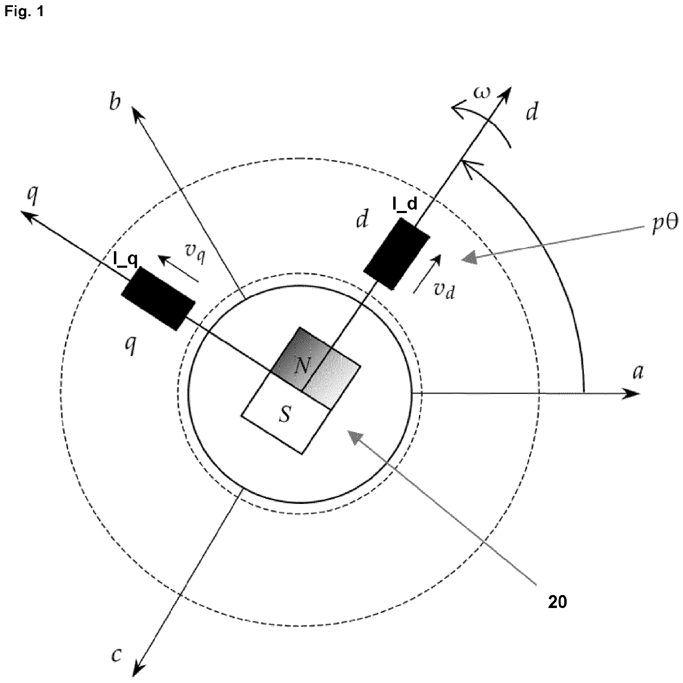

Im Regelungsregime der feldorientierten Regelung besteht das Statorfeld, d.h. das Magnetfeld des Stators des Motors des elektrischen Geräts, üblicherweise aus drei Einzelfeldern, die vorzugsweise den drei Motor-Phasen entsprechen. Dieses Statorfeld kann im Kontext der vorliegenden Erfindung so umgerechnet werden, dass sich zwei virtuelle Spulen direkt vor dem Nord-pol (d-Achse) und um 90° versetzt vor dem Nordpol ausbilden. Dabei ist die d-Achse vorzugsweise so definiert, dass sie durch eine Mitte des Nord-Pols des Rotors verläuft. Die Lage und Anordnung dieser zwei virtuellen Spulen wird in Figur 1 dargestellt, die einen Motor in einem rotorfesten bzw. rotierenden d-q-Koordinatensystemzeigt.

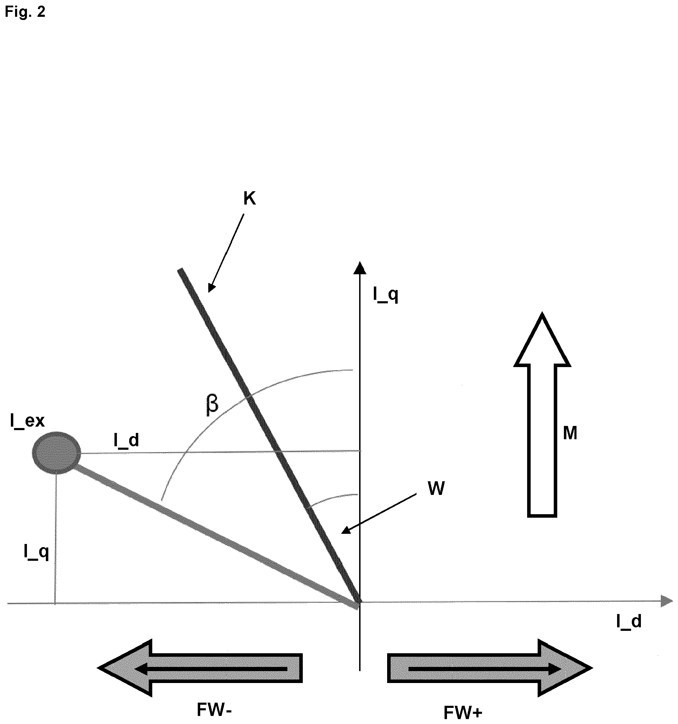

In diesem rotierenden d-q-Koordinatensystemkönnen vorteilhafterweise zwei Felder geregelt werden: Mit dem D-Feld kann die magnetische Flussverkettung zwischen dem Nordpol des Rotors und der Spule des Stators manipuliert bzw. beeinflusst werden. Mit dem Q-Feld kann das Drehmoment des Motors des elektrischen Geräts manipuliert bzw. verändert werden. Der Veränderung des Drehmoments liegt der Gedanke zugrunde, dass ein Südpol an der Statorspule zu einer Anziehung des Nordpols des Rotors führt. Durch den Strom, der dadurch durch die Spule des Stators fließt, kann vorteilhafterweise das Drehmoment des Motors variabel und bedarfsgerecht eingestellt werden. Das D-Feld ist vorzugsweise mit der Flußstromkomponente $I\_d$ verbunden, während das Q-Feld mit der momentbildenden Komponente $I\_q$ des elektrischen Stroms in Verbindung steht. Eine Übersicht über die verwendeten Größen und Zusammenhänge kann den Figuren 1 und 2 entnommen werden.

Bei Verwendung einer feldorientierten Regelung des elektrischen Geräts bzw. seines Motors kann das Statorfeld, d.h. das Magnetfeld des Stators des Motors des elektrischen Geräts, der elektrische Strom eine

Flußstromkomponente I_d und eine momentbildende Komponente I_q aufweisen kann, wobei die Schwächung des Magnetfelds B vorzugsweise durch eine in negative Richtung verschobene Flußstromkomponente I_d erreicht wird. Die Feldorientierung ist vorzugsweise dazu eingerichtet, die verschiedenen relevanten Größen in ein bevorzugt rotierendes Koordinatensystem umzurechnen, wobei das Koordinatensystem insbesondere am Fluß bzw. Feld des Rotors des Motors der Werkzeugmaschine orientiert ist.

Die Flußstromkomponente I_d kann im Sinne der Erfindung bevorzugt auch als «d-Strom» bezeichnet werden, während die momentbildende Komponente I_q im Rahmen der Erfindung als «q-Strom» bezeichnet werden kann. Es ist im Sinne der Erfindung bevorzugt, dass das vorgeschlagene Verfahren insbesondere mit negativen d-Strömen durchgeführt wird bzw. dass die Schwächung des Magnetfelds B durch eine negative Flußstromkomponente I_d ermöglicht wird. Wenn bei Betrieb des elektrischen Geräts der optimale MTPA-Bereich, bei dem das elektrische Gerät mit einem maximalen Drehmoment pro zugeführtem Strom betrieben wird, verlassen wird und darüber hinaus eine negative Flußstromkomponente I_d die Magneten im Motor des elektrischen Geräts schwächt (=> Feldschwächung), kann die Drehzahl des Motors erheblich ansteigen. Dies kann vorteilhafterweise dazu führen, dass Drehzahlen oder Drehzahlbereiche erreicht werden können, ohne dass ein Getriebe an dem elektrischen Gerät vorgesehen sein muss. Die so erreichbaren Drehzahlen oder Drehzahlbereiche entsprechen vorzugsweise dem zweiten Drehzahlbereich, der von dem Motor des elektrischen Geräts nach der Feldschwächung erreicht werden kann, bei die Drehzahlen des zweiten Drehzahlbereichs im Durchschnitt größer sind als die Drehzahlen des ersten Drehzahlbereichs, den der Motor des elektrischen Geräts vor der Feldschwächung erreicht. Falls bereits ein Getriebe an dem elektrischen Gerät vorhanden ist, kann mit der Erfindung die Anzahl der Getriebestufen reduziert werden, so dass das Getriebe einfacher aufgebaut oder weniger Bestandteile und Komponenten umfassen kann. Dadurch können beispielsweise die Herstellung oder die Reparatur des elektrischen Geräts vereinfacht werden.

Es ist im Sinne der Erfindung bevorzugt, dass das elektrische Gerät nicht in einem Arbeitspunkt mit einem maximalen Drehmoment betrieben wird, wenn das elektrische Gerät im zweiten Drehzahlbereich arbeitet. Der Begriff «Arbeitspunkt» kann im Sinne der Erfindung bevorzugt als sog. «MTPA-Punkt» verstanden werden, in dem das elektrische Gerät so gesteuert bzw. betrieben wird, dass ein möglichst geringer Strom zu einem möglichst großen resultierenden Drehmoment führt (MTPA = maximum torque per ampere, maximales Drehmoment pro Stromeinheit Ampere). Es ist im Sinne der Erfindung ganz besonders bevorzugt, dass das elektrische Gerät nicht in einem MTPA-Punkt mit einem maximalen Drehmoment betrieben wird, wenn das elektrische Gerät im zweiten Drehzahlbereich arbeitet. Damit wendet sich die Erfindung gerade von konventionellen elektrischen Geräten ab, wie sie im Stand der Technik beschrieben werden. Konventionelle elektrische Geräte werden in der Regel genau in ihrem MTPA-Punkt betrieben, in dem die elektrischen Geräte oder ihre Motoren ein maximales Drehmoment pro Ampere (Maximum Torque Per Ampere = MTPA) erreichen. Allerdings hat es sich gezeigt, dass - wenn ein elektrisches Gerät gemäß dem MTPA-Regelschema betrieben wird - nur ein schmaler oder enger Bereich von Drehzahlen zugänglich ist. Um dem Nutzer trotzdem eine größere Bandbreite an Drehzahlen anbieten zu können, wird im Stand der Technik häufig mit Getriebestufen gearbeitet.

Allerdings ist die Vorsehung von mehreren Getriebestufen häufig mit dem Nachteil verbunden, dass sich das Gewicht der Werkzeugmaschine erhöht und der Auf- und Zusammenbau des Geräts eine erhöhte Komplexität erfordert. Darüber hinaus müssen in der Regel Bedienelemente vorgesehen werden, um Einstellungen in Bezug auf das Getriebe vorzunehmen zu können. Beispielsweise können Auswahlschalter zur Wahl einer Getriebestufe oder eines «Gangs» erforderlich sein, damit der Nutzer der Werkzeugmaschine das Getriebe nutzen kann.

Üblicherweise werden im Bereich der elektrischen Geräte Standard-Kommutierungsmethoden, wie die Block-Kommutierung oder feldorientierte Regelung verwendet, um den Motor des elektrischen Geräts zu steuern. Dabei wird der Motor des elektrischen Geräts in der Regel im optimalen MTPA-Winkel betrieben, wobei der optimale MTPA-Winkel im Sinne der Erfindung derjenige Winkel ist, der bei kleinstem zugeführten Strom das größte Drehmoment erzeugt. Mit der vorliegenden Erfindung wird dieses konventionelle Regelungskonzept für den Motor des elektrischen Motors, bei dem ein möglichst großes Drehmoment mit einem möglichst kleinen elektrischen Strom erzeugt werden soll, verlassen, um mit dem elektrischen Gerät eine höhere Bandbreite an Drehzahlen erreichen zu können. Ein weiterer Vorteil, der mit der Erfindung auf diese Weise ermöglicht werden kann, besteht darin, dass in dem elektrischen Gerät auf die Vorsehung eines Getriebes verzichtet werden kann. Wenn das elektrische Gerät bereits ein Getriebe aufweist, kann mit der Erfindung vorteilhaftweise die Anzahl der erforderlichen Getriebestufen reduziert werden und gleichzeitig weiter eine große Bandbreite an Drehzahlen abgedeckt werden. Mit anderen Worten kann mit der Erfindung ein besonders großer Drehzahlbereich abgedeckt werden, ohne dass dafür ein aufwändiges Getriebe oder eine große Anzahl von Getriebestufen an dem elektrischen Gerät bereitgestellt werden muss.

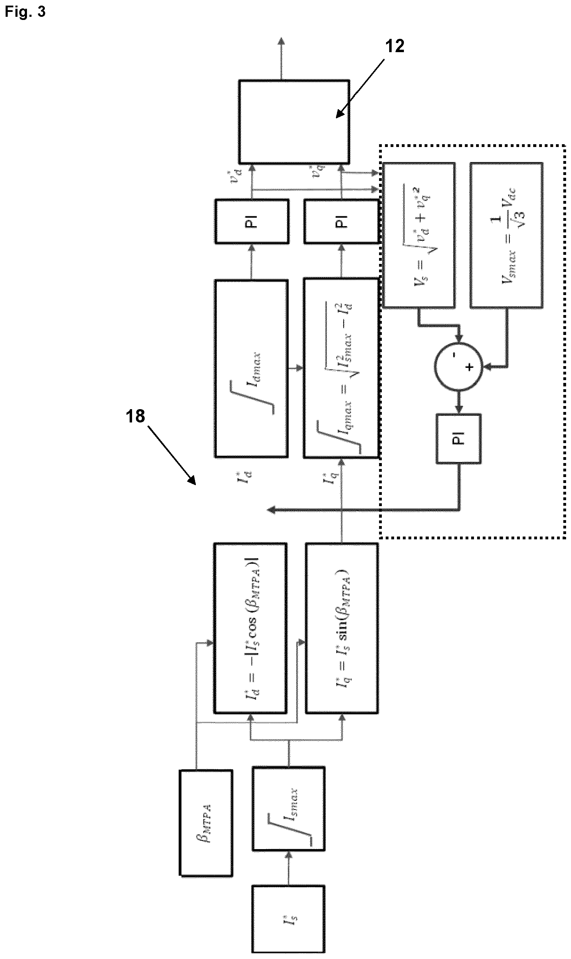

Um die Schwächung des Magnetfeld B durchzuführen, ist eine Spannung V_s erforderlich. Diese Spannung V_s kann größer sein als eine im elektrischen Gerät zur Verfügung stehende Spannung V_s_max. Die für die Feldschwächung erforderliche Spannung V_s kann üblicherweise auch nicht durch die konventionellen Regelungsverfahren der Block-Kommutierung oder der feldorientierten Regelung aufgebracht werden, wenn nach dem MTPA-Regelungsprinzip versucht wird, mit möglichst geringem Aufwand an elektrischem Strom ein maximales Drehmoment zu erhalten. Das Blockschaltbild, das die Regelung bzw. Steuerung des elektrischen Geräts gemäß der vorliegenden Erfindung beschreibt, kann daher vorzugsweise um zusätzliche Blöcke und Komponenten erweitert sein, um die über die Spannungsgrenze V_s_max hinausgehende Spannung V_s für die Feldschwächung bereitzustellen. Das entsprechend ergänzte Blockschaltbild ist in Figur 3 dargestellt, wobei das in Figur 3 dargestellte Blockschaltbild eine mögliche Ausführungsform der Erfindung zeigt. Das Mehr Δ an Spannung, das für die Feldschwächung benötigt wird, ergibt sich vorzugsweise aus der Differenz zwischen der zur Verfügung stehenden Spannung V_s_max und der für die Schwächung des Magnetfelds erforderlichen Spannung V_s, d.h.

$$\Delta = V\_s - V\_s\_max$$

Die Feldschwächung kann beispielsweise wie folgt implementiert werden: Wenn für die Schwächung des Magnetfeld B ein Mehr Δ an Spannung benötigt wird, kann ein Grad der Überspannung vom d-Strom abgezweigt und weiter in den negativen Bereich geschoben werden. Der d-Strom sorgt vorzugsweise dafür, dass das Magnetfeld B des Rotors des Motors des elektrischen Geräts abnimmt bzw. geschwächt wird. Dadurch kann der Motor mit mehr Spannung betrieben werden als zuvor, so dass höhere Drehzahlen bzw. eine größere Bandbreite an Drehzahlen ermöglicht werden. Selbstverständlich sind auch andere Möglichkeiten denkbar und bevorzugt, um die Feldschwächung zu implementieren.

Es ist im Sinne der Erfindung bevorzugt, dass Drehzahlen in einem Bereich von 4.000 bis 21.000 Umdrehungen pro Minute erreicht werden, bevorzugt Drehzahlen in einem Bereich von 4.200 bis 15.000 Umdrehungen pro Minute, besonders bevorzugt Drehzahlen in einem Bereich von 4.500 bis 10.000 Umdrehungen pro Minute und am meisten bevorzugt Drehzahlen in einem Bereich von 5.000 bis 8.000 Umdrehungen pro Minute.

In einem Ausführungsbeispiel der Erfindung kann die Flußstromkomponente I_d des elektrischen Stroms vor dem Nordpol des Rotors des Motors der Werkzeugmaschine einen Nordpol erzeugen, so dass durch die gleichen Polungen der magnetischen Pole das Magnetfeld B geschwächt wird, so dass der Motor des elektrischen Geräts mit einer größeren Bandbreite an Drehzahlen rotieren kann. Es ist im Sinne der Erfindung ganz besonders bevorzugt, dass durch die Flußstromkomponente I_d des elektrischen Stroms der zweite Nordpol vor dem Rotornordpol auf der Statorseite des Motors der Werkzeugmaschine entsteht. Die Formulierung, dass der zweite Nordpol auf der Statorseite des Motors der Werkzeugmaschine vor dem Rotornordpol entsteht, kann im Kontext der vorliegenden Erfindung vorzugsweise damit umschrieben werden, dass der Nordpol als Beispiel für einen zweiten magnetischen Pol in räumlicher Nähe zu dem Rotornordpol als Beispiel für einen ersten magnetischen Pol entsteht. Mit anderen Worten kann der erste magnetische Pol von einem Nordpol gebildet werden, während der zweite magnetische Pol ebenfalls von einem Nordpol, also einem Pol gleicher Polung, gebildet wird. Vorzugsweise entsteht durch die Flußstromkomponente I_d des elektrischen Stroms im Bereich eines Rotorpols mit einer ersten Polung ein magnetischer Pol mit einer zweiten Polung, wobei die Polungen des Rotorpols und des magnetischen Pols gleich sind. Es ist im Sinne der Erfindung ganz besonders bevorzugt, dass durch die Flußstromkomponente I_d des elektrischen Stroms vor dem Rotorpols mit der ersten Polung ein magnetischer Pol mit einer zweiten Polung entsteht, wobei die Polungen des Rotorpols und des magnetischen Pols gleich sind. Vorzugsweise bildet sich der magnetische Pol mit der zweiten Polung auf der Statorseite des Motors der Werkzeugmaschine aus. Es ist im Sinne der Erfindung bevorzugt, dass die Flußstromkomponente I_d des überschüssigen Stroms kein Moment erzeugt, während die Stromkomponente I_q als «momentbildende Komponente des elektrischen Stroms» bezeichnet werden kann.

In einem zweiten Aspekt betrifft die Erfindung elektrisches Gerät zur Durchführung des vorgeschlagenen Verfahrens. Die für das Verfahren eingeführten Begriffe, Definitionen und technischen Vorteile gelten vorzugsweise für das elektrische Gerät analog. Der Motor des elektrischen Geräts ist ein bürstenloser Motor. Es ist im Sinne der Erfindung ganz besonders bevorzugt, dass der Motor des elektrischen Geräts ein BLDC-Motor ist, d.h. ein bürstenloser Gleichstrommotor. Die Feldschwächbarkeit des Motors des elektrischen Geräts wird vorzugsweise über eine geeignete Geometrie des Motors erreicht, wobei insbesondere eine Ausgestaltung mit vergrabenen Magneten bevorzugt ist. Vergrabene Magneten gewähren vorteilhafterweise eine besonders gute Feldschwächbarkeit, so dass mit ihnen besonders einfach ein vergrößerter Drehzahlbereich des elektrischen Geräts bereitgestellt werden kann. Vorteilhafterweise kann die Erfindung bei Motoren mit unterschiedlichen Polzahlen eingesetzt werden. Das heißt im Sinne der Erfindung bevorzugt, dass der Einsatz der Erfindung nicht auf einzelne Motordesigns mit einer bestimmten Anzahl von Polen beschränkt ist. Beispielsweise kann die Erfindung bei elektrischen Motoren mit zwei, drei, vier, sechs, acht, zehn, zwölf oder mehr Polen zum Einsatz kommen.

Es ist im Sinne der Erfindung bevorzugt, dass der Motor des elektrischen Geräts mit Hilfe einer feldorientierten Regelung oder einer Blockkommutierung regelbar ist, wobei Figur 3 insbesondere die Feldschwächung mit Feldorientierung bzw. für einen mit Feldorientierung geregelten Motor zeigt. Vorzugsweise ist der Motor des elektrischen Geräts elektronisch kommutiert oder elektronisch kommutierbar.

Es ist im Sinne der Erfindung ganz besonders bevorzugt, dass das elektrische Gerät nicht in einem Arbeitspunkt bzw. MTPA-Punkt mit einem maximalen Drehmoment betrieben wird. Es ist stattdessen vielmehr bevorzugt, dass der Grad der Überspannung vom d-Strom bzw. von der Flußstromkomponente I_d des elektrischen Stroms abgezweigt und weiter in den negativen Bereich geschoben wird. Der d-Strom bzw. die Flußstromkomponente I_d des elektrischen Stroms sorgen dann vorzugsweise dafür, dass das Magnetfeld B des Rotors des Motors des elektrischen Geräts abgeschwächt wird, so dass der erreichbare Drehzahlbereich aufgeweitet werden kann (=> Drehzahlspreizung).

Es ist im Sinne der Erfindung bevorzugt, dass das elektrische Gerät eine Elektronik aufweist, die dazu eingerichtet ist, einen elektrischen Strom I in einer Rotormagnetisierungsachse so zu manipulieren, dass das Magnetfeld B des Rotors des Motors des elektrischen Geräts geschwächt wird, so dass dadurch höhere Drehzahlen ermöglicht werden. Es ist im Sinne der Erfindung ganz besonders bevorzugt, dass der Motor des elektrischen Geräts mit einer Elektronik mit Hilfe einer feldorientierten Regelung (field oriented control, FOC) kommutiert. Vorzugsweise kann die feldorientierte Regelung, die im Kontext der vorliegenden Erfindung Verwendung findet, dazu eingerichtet sein, dass eine Drehzahlspreizung durch ein Verstellen bzw. durch eine Änderung des Winkels beta ermöglicht wird. Die Drehzahlspreizung kann im Kontext der vorliegenden Erfindung vorteilhafterweise ohne eine bei konventionellen elektrischen Geräten erforderliche Anhebung der Spannung herbeigeführt werden. Wie weiter oben bereits ausgeführt, ist der Winkel beta der Winkel, der von den Stromkomponenten I_d und I_q eingestellt werden kann. Vorzugsweise kann im Kontext der Erfindung der Winkel beta verändert werden, während der MTPA-Winkel als optimaler Winkel beta, der durch ein maximales Moment bei minimalem elektrischen Strom gekennzeichnet ist, für jeden Motor bzw. Stator-Strom fest ist.

Es ist im Sinne der Erfindung bevorzugt, dass die Steuervorrichtung des elektrischen Geräts dazu in der Lage ist, zu erkennen, dass eine höhere Spannung erforderlich ist. Diese höhere Spannung bzw. das Mehr an Spannung im Vergleich zu der vorhandenen Spannung wird in Figur 3 als "delta" dargestellt. Um diese Spannung in den Motor zu bekommen, wird vorteilhafterweise der d-Strom bzw. die d-Stromkomponente manipuliert. Diese Veränderung der d-Stromkomponenten resultiert in einem geänderten Winkel beta. Mit anderen Worten führt eine Veränderung der d-Stromkomponente zu einer Veränderung des Winkels beta, so dass eine höhere Spannung im Motor des elektrischen Geräts bereitgestellt werden kann. Alternativ dazu kann es im Kontext der vorliegenden Erfindung bevorzugt sein, den Winkel beta zu verändern.

Es ist im Sinne der Erfindung bevorzugt, dass die Geometrie des Motors seine Feldschwächbarkeit verbessern kann, so dass das Magnetfeld B des Motors geschwächt und der Drehzahlbereich vergrößert wird. Es ist im Sinne der Erfindung bevorzugt, dass das elektrische Gerät eine Mensch-Maschine-Schnittstelle zur Eingabe eines gewünschten Drehzahlbereichs aufweist.

Der Motor der Werkzeugmaschine ist ein bürstenloser Motor, der vorzugsweise eine Leistung von mehr als 1,8 Kilowatt (kW) abgeben kann. Vorzugsweise kann es sich bei der Werkzeugmaschine um ein bürstenlos gesteuertes Elektrogerät mit Bremsfunktion handeln. Beispielsweise kann die Werkzeugmaschine als elektrisch betriebener Trennschleifer ausgebildet sein. Es ist im Sinne der Erfindung ganz besonders bevorzugt, dass es sich bei der Werkzeugmaschine um einen akkubetriebenen Trennschleifer mit einer Trennscheibe als Werkzeug handelt. Die Werkzeugmaschine kann mit mindestens einer Energieversorgungsvorrichtung verbunden werden, um von der Energieversorgungsvorrichtung mit elektrischer Energie versorgt zu werden. Die mindestens eine Energieversorgungsvorrichtung der Werkzeugmaschine kann beispielsweise eine Spannung von mehr als 20 Volt (V) abgeben. Besonders bevorzugt ist eine Spannung zwischen 21 und 22 V. Die Werkzeugmaschine kann auch zwei oder mehr Energieversorgungsvorrichtungen aufweisen. Wenn die Werkzeugmaschine mehr als eine Energieversorgungsvorrichtung aufweist, kann die elektrische Energie, die beim Abbremsen der Werkzeugmaschine frei wird, in die erste und/oder in die zweite Energieversorgungsvorrichtung zurückgespeist werden. Dieses Rekuperieren kann im Wesentlichen gleichzeitig, nacheinander oder gemäß einem speziell dafür vorgesehenen Algorithmus erfolgen.

Die Trennscheibe stellt ein scheibenförmiges Werkzeug des Trennschleifers dar. Die Trennscheibe kann einen Durchmesser aufweisen, der beispielsweise größer als 230 Millimeter (mm) ist. Beispielsweise kann die Trennscheibe Durchmesser von 300 mm, 250 mm oder 400 mm aufweisen, ohne darauf beschränkt zu sein. Ein Gewicht der Trennscheibe kann beispielsweise in einem Bereich zwischen 200 und 2.500 Gramm, d.h. zwischen 0,2 und 2,5 Kilogramm (kg), liegen. Beispielsweise kann das Gewicht der Trennscheibe Werte von 210 Gramm, 530 Gramm, 550 Gramm, 930 Gramm, 1.270 Gramm, 1.280 Gramm, 1.720 Gramm oder 2.450 Gramm annehmen, ohne darauf beschränkt zu sein. Beispielsweise kann es sich bei der Trennscheibe mit eine Diamant-Trennscheibe oder um eine abrasive Trennscheibe mit gebundenen Schleifkörnern handeln. Ein Diamant-Trennscheibe ist vorzugsweise dadurch gekennzeichnet, dass sie einen Stahlkem mit Diamant-Segmenten aufweist.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:

Fig. 1     schematische Darstellung des Motors einer bevorzugten Ausgestaltung des elektrischen Geräts in rotorfesten, rotierenden d-q-Koordinatensystem

Fig. 2     Übersicht über Größen und Begriffe in dem rotorfesten, rotierenden d-q-Koordinatensystem

Fig. 3     Blockschaltbild einer möglichen Ausgestaltung des Verfahrens bzw. Darstellung einer möglichen Funktionsweise der Elektronik des elektrischen Geräts

Fig. 4     schematische Darstellung einer bevorzugten Ausgestaltung der vorgeschlagenen Werkzeugmaschine

**Ausführungsbeispiele und Figurenbeschreibung:**

Figur 1 zeigt eine schematische Darstellung des Motors 12 einer bevorzugten Ausgestaltung des elektrischen Geräts in einem rotorfesten, rotierenden d-q-Koordinatensystem, das vorzugsweise auch als Raumzeiger-Darstellung bezeichnet werden kann. Das in Figur 1 dargestellte Koordinatensystem repräsentiert vorzugsweise den Motor 12 des elektrischen Geräts 100 in einem statorfesten Koordinatensystem. Dargestellt in Figur 1 ist insbesondere der Rotor 20 des Motors 12 des elektrischen Geräts 100. Zu sehen sind die d- und q-Achsen der Raumzeiger-Darstellung und eine Regelung des elektrischen Geräts 100 in einer feldorientierten Regelung. Wie in Figur 1 zu erkennen ist, bilden sich zwei virtuelle Spulen (schwarze Blöcke) aus, die jeweils direkt vor dem Nordpol auf der d-Achse und 90 ° vor dem Nordpol ausbilden. Der Grundgedanke, der der vorliegenden Erfindung zugrunde liegt und der in Figur 1 dargestellt wird, besteht darin, dass die elektrischen Ströme und Spannungen, welche üblicherweise auf den festen Stator eingeprägt sind, mathematisch in ein bevorzugt rotierendes Koordinatensystem auf dem Rotor umgerechnet werden. Dies hat den Vorteil, dass alternierenden Größen, die beispielsweise einen sinus-förmigen Verlauf haben, zu Gleichgrößen werden.

Figur 2 zeigt eine Übersicht über Größen und Begriffe in dem rotorfesten d-q-Koordinatensystem bzw. in der Raumzeiger-Darstellung. Dargestellt sind die d-Achse und die q-Achse und ein beispielhafter elektrischer Strom I_ex, der als Punkt in dem Raumzeiger-Diagramm dargestellt ist. Es ist im Sinne der Erfindung bevorzugt, dass die Achsen des rotorfesten Koordinatensystems mit den Buchstaben «q» und «d» bezeichnet werden. Die physikalischen Größen, wie Strom I, Spannung v oder Induktivität L entlang dieser Achsen, werden dann jeweils mit dem Buchstaben q oder d als Index dargestellt: I_d, I_q, vq, vd, Lq oder Ld, wobei ein Unterstrich zur Trennung der physikalischen Größen und des Index verwendet werden kann oder nicht.

Der elektrische Strom I_ex weist eine Flußstromkompente I_d und eine momentbildende Komponente I_q auf, die jeweils den q- und d-Koordinaten des elektrischen Stroms I_ex in dem Raumzeiger-Diagramm entsprechen. Darüber hinaus sind in Figur 2 die MTPA-Linie L und der MTPA-Winkel W dargestellt. Wenn das elektrische Gerät 100 gemäß dem MTPA-Regelschema betrieben würde, so dass ein möglichst großes Drehmoment mit einem möglichst geringen Aufwand an elektrischem Strom bewirkt werden soll, läge der Punkt, der den elektrischen Strom I_ex symbolisiert auf der MTPA-Kurve K. Um den zur Verfügung stehenden elektrischen Strom I optimal zu nutzen, ist es gemäß dem MTPA-Regelschema bevorzugt, dass der elektrische Strom I auf der MTPA-Kurve K liegt. Es ist im Sinne der Erfindung allerdings bevorzugt, dass der elektrische Strom I bzw. ein Arbeitspunkt des elektrischen Geräts 100 gerade nicht auf der MTPA-Kurve K liegt, sondern abseits davon. Mit anderen Worten: es wird im Kontext der vorliegenden Erfindung bewusst von dem MTPA-Regelschema abgewichen, um in dem elektrischen Gerät 100 nicht das Drehmoment zu maximieren, sondern eine möglichst große Bandbreite an Drehzahlen bereitzustellen. Durch die Abweichung von dem MTPA-Regelschema wird das elektrische Gerät 100 gerade nicht auf eine Maximierung des Drehmoments geregelt, sondern auf eine möglichst große Bandbreite von Drehzahlen.

Der elektrische Strom I_ex, der in Figur 2 beispielhaft gezeigt wird, weist eine Flußstromkompente I_d und eine momentbildende Komponente I_q auf, wobei die momentbildende Komponente I_q einen positiven Wert annimmt, während die Flußstromkompente I_d einen negativen Wert annimmt. Eine größere Bandbreite von Drehzahlen bzw. eine Verschiebung der Drehzahlen hin zu größeren Werten kann durch eine Schwächung des Magnetfeldes B erreicht werden, wobei aus Figur 2 hervorgeht, dass eine Feldschwächung B- insbesondere bei negativen Werten der Flußstromkompente I_d des elektrischen Stroms I_ex auftritt. Dahingegen wirken positive Flußstromkompente I_d des elektrischen Stroms I_ex grundsätzlich feldstärkend, d.h. sie bewirken eine Feldstärkung. Es ist im Sinne der Erfindung bevorzugt, dass das Magnetfeld B entlang der d-Achse der Raumzeiger-Darstellung manipuliert werden kann. Wie in Figur 2 gezeigt, kann eine Verschiebung der Flußstromkompente I_d des elektrischen Stroms I_ex in eine negative Richtung (nach links) zu einer Feldschwächung FW-führen, während eine Verschiebung der Flußstromkompente I_d des elektrischen Stroms I_ex in eine positive Richtung (nach rechts) zu einer Feldstärkung FW+ führen kann. Es ist im Sinne der Erfindung ganz besonders bevorzugt, dass im Kontext der vorliegenden Erfindung der magnetische Fluß, der vom Rotor in den Stator einkoppelt, geschwächt wird.

Darüber hinaus ist in Figur 2 der Winkel β abgebildet, der von der Flußstromkompente I_d und der momentbildende Komponente I_q des elektrischen

Stroms I eingeschlossen wird. Es gilt folgende Relation:

$$\tan(\beta) = I\_d / I\_q.$$

Ferner ist in Figur 2 gezeigt, dass das Drehmoment entlang der q-Achse des Raumzeiger-Diagramms manipuliert bzw. beeinflusst werden kann. Diese Möglichkeit der Beeinflussung des Drehmoments wird in Figur 2 mit dem Bezugszeichen «M» symbolisiert, das vorzugsweise auch für «momentbildend» oder für das Drehmoment steht.

Figur 3 zeigt ein Blockschaltbild einer möglichen Ausgestaltung des Verfahrens bzw. Darstellung einer möglichen Funktionsweise der Elektronik 18 des elektrischen Geräts 100. Das Blockschaltbild zeigt, wie die Elektronik 18 das elektrische Gerät 100 steuert.

Der Eingangswert der Regelung ist eine Anforderung an die Drehzahl des Motors 12 des elektrischen Geräts 100, wobei diese Anforderung als I\_s* bezeichnet wird. Ein hochgestelltes Sternchen bezeichnet im Sinne der Erfindung bevorzugt eine Sollgröße. Beispielsweise kann der Winkel β, der von der Flußstromkompente I\_d und der momentbildende Komponente I\_q des elektrischen Stroms I eingeschlossen wird, im Kontext der vorliegenden Erfindung 30 ° betragen. Der Winkel β kann über die in Figur 3 abgebildeten Relationen verwendet werden, um die Flußstromkompente I\_d und die momentbildende Komponente I\_q des elektrischen Stroms I zu berechnen.

Das vorgeschlagene Verfahren wird in dem in Figur 3 dargestellten Blockschaltbild insbesondere durch diejenigen Blöcke verwirklicht, die im unteren, rechten Bereich des Blockschaltbilds von einem gestrichelten Rechteck umgeben sind. In diesen Blöcken wird insbesondere die aktuelle Statorspannung V\_s und eine Spannungsgrenze V\_s\_max als Eingangsgrößen verwendet, um eine theoretische benötigte Überspannung Δ zu berechnen. Die Überspannung Δ ergibt sich vorzugsweise aus der Differenz zwischen der zur Verfügung stehenden Spannung V\_s\_max und der für die Schwächung des Magnetfelds B erforderlichen Spannung V\_s, d.h.

$$\Delta = V\_s - V\_s\_max.$$

Wenn es sich bei dem elektrischen Gerät 100 beispielsweise um ein akkubetriebenes elektrisches Gerät 100 handelt, das über eine Energieversorgungsvorrichtung 14 mit elektrischer Energie versorgt wird, kann eine Spannungsgrenze beispielsweise bei V\_dc = 18-25 Volt (V) liegen. Die so ermittelten Parameter für die Feldschwächung B- gehen dann in die weiteren Berechnungen ein, die von der Elektronik 18 des elektrischen Geräts 100 durchgeführt werden, um den Motor 12 des elektrischen Geräts 100 zu steuern, so dass eine möglichst große Bandbreite von Motor-Drehzahlen bzw. Motor-Geschwindigkeiten bereitgestellt werden kann. Die Elektronik 18 des elektrischen Geräts 100 kann an verschiedenen Stellen Regler oder Regelvorrichtungen umfassen, die mit dem Bezugszeichen «PI» bezeichnet werden. Die Regler PI können insbesondere als sog. PI-Regler ausgebildet sein.

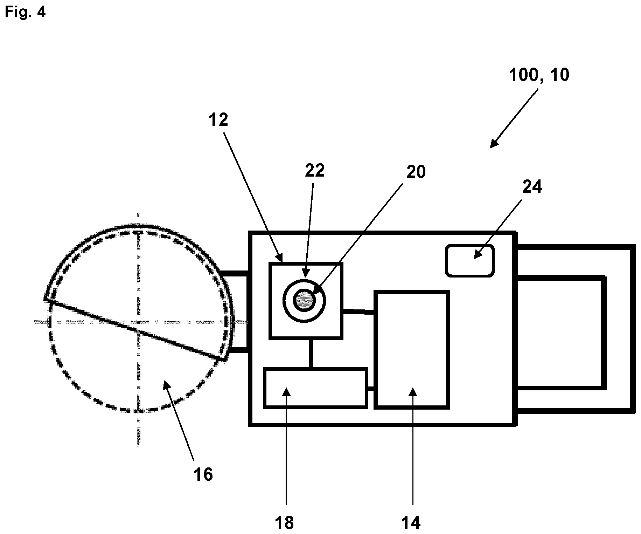

Figur 4 zeigt eine schematische Darstellung einer bevorzugten Ausgestaltung des vorgeschlagenen elektrischen Geräts 100, wobei das in Figur 4 dargestellte elektrischen Gerät 100 insbesondere eine Werkzeugmaschine 10 ist. Ein Sauggerät 50 ist in den Figuren nicht dargestellt.

Der Fachmann weiß aber, wie ein Sauggerät 50, das beispielsweise ein Industrie- oder Werkstattsauger sein kann, aussieht und üblicherweise beschaffen ist. Die Werkzeugmaschine 10, die in Figur 4 gezeigt wird, weist einen Motor 12 auf, der insbesondere als bürstenloser Motor ausgebildet ist. Die Werkzeugmaschine 10 kann ein Werkzeug 16 aufweisen, das beispielsweise als scheibenförmiges Schneidwerkzeug ausgebildet sein kann. Bei der in Figur 4 abgebildeten Werkzeugmaschine 10 handelt es sich vorzugsweise um einen Trennschleifer, mit dem Schnitte in einen Untergrund, wie Beton, eingebracht werden können. Das Werkzeug 16 der Werkzeugmaschine 10 kann von einem Blattschutz (ohne Bezugszeichen) umgeben sein, um den Nutzer der Werkzeugmaschine 10 vor Späne- und Funkenflug zu schützen. Die Werkzeugmaschine 10 kann mit mindestens einer Energieversorgungsvorrichtung 14 verbunden werden, um die Werkzeugmaschine 10 mit elektrischer Energie zu versorgen. Selbstverständlich kann die Werkzeugmaschine 10 auch über eine Netzverbindung aus einem öffentlichen oder einem Baustellen-Netz elektrische Energie beziehen. Die Werkzeugmaschine 10 kann darüber hinaus einen oder mehrere Handgriffe (ohne Bezugszeichen) aufweisen, mit denen der Nutzer der Werkzeugmaschine 10 die Werkzeugmaschine 10 transportieren oder bei der Arbeit führen kann.

Die Werkzeugmaschine 10, die in Figur 4 dargestellt ist, weist eine Elektronik 18, die über Leitungsmittel (ohne Bezugszeichen) mit dem Motor 12 und der Energieversorgungsvorrichtung 14 verbunden vorliegt. Mit den Leitungsmitteln können Daten, elektrischer Signale oder elektrische Energie zwischen der Elektronik 18, dem Motor 12 und/oder der Energieversorgungsvorrichtungen 14 der Werkzeugmaschine 10 ausgetauscht werden.

Der Motor 12 der Werkzeugmaschine 10, die in Figur 4 dargestellt ist, umfasst einen Stator 22 und einen Rotor 20. Bei dem in Figur 4 dargestellten Ausführungsbeispiel der Erfindung ist der Rotor 20 im Inneren des Stators 22 des Motors 12 angeordnet. Selbstverständlich sind aber auch viele andere Motor-Geometrien denkbar und im Sinne der Erfindung bevorzugt. Darüber hinaus kann die Werkzeugmaschine 10, die in Figur 4 gezeigt wird, eine Mensch-Maschine-Schnittstelle 24 aufweisen, über die ein Nutzer des elektrischen Geräts 100 Eingaben vornehmen kann. Die Mensch-Maschine-Schnittstelle 24 kann Betätigungselemente, wie Schalter oder Knöpfe aufweisen (nicht darstellt), die von einem Nutzer betätigt werden können, um Eingaben zu machen. Alternativ oder ergänzend kann die Mensch-Maschine-Schnittstelle 24 eine Anzeigevorrichtung, wie einen Bildschirm oder einen Monitor, aufweisen (nicht dargestellt), über die das elektrische Gerät 100 dem Nutzer Informationen anzeigen kann. Die Eingaben oder Informationen können beispielsweise einen gewünschten Drehzahlbereich oder einen tatsächlichen Drehzahlbereich des elektrischen Geräts 100 betreffen.

**Bezugszeichenliste**

| | |
|---|---|
| 10 | Werkzeugmaschine |
| 12 | Motor |
| 14 | Energieversorgungsvorrichtung |
| 16 | Werkzeug |
| 18 | Elektronik |
| 20 | Rotor |
| 22 | Stator |
| 24 | Mensch-Maschine-Schnittstelle |
| 50 | Sauggerät |
| 100 | elektrisches Gerät |
| PI | Regler, insbesondere PI-Regler |
| S | Südpol |
| N | Nordpol |
| B | Magnetfeld |
| FW+ | Feldstärkung |
| FW- | Feldschwächung |
| M | momentbildend, Drehmoment |
| I | elektrischer Strom |
| I_ex | beispielhafter Strom |
| I_q | momentbildende Komponente des elektrischen Stroms |
| I_d | Flußstromkomponente |
| β | Winkel, der von der momentbildende Komponente I_q und der Flußstromkomponente I_d eingeschlossen wird |
| K | MTPA-Kurve |
| W | MTPA-Winkel für den aktuellen Strom I_s |
| a, b, c: | reales 3-Phasensystem |
| q: | q-Achse des rotorfesten Koordinatensystems orthogonal zum magnetischen Fluss |
| vq: | Spannung in q-Richtung |
| pθ: | Winkel zwischen d-Achse und der Phase a |
| d: | d-Achse des rotorfesten Koordinatensystems entlang des magn. Flusses |
| vd: | Spannung in d-Richtung |
| ω: | Winkelgeschwindigkeit |

**Patentansprüche**

1. Verfahren, um in einem elektrischen Gerät (100), das einen Motor (12) aufweist, eine große Bandbreite an Drehzahlen bereitzustellen, **gekennzeichnet durch die folgenden Verfahrensschritte:**

   a) Betrieb des elektrischen Geräts (100) in einem ersten Drehzahlbereich, wobei der Motor (12) von einem elektrischen Strom I durchflossen wird, wobei der elektrische Strom I ein Magnetfeld B erzeugen kann,
   b) Erzeugung eines zweiten magnetischen Pol mit einer zweiten Polung in räumlicher Nähe eines ersten magnetischen Pols mit einer ersten Polung im Motor (12) des elektrischen Geräts (100), wobei die erste Polung und die zweite Polung gleich sind,
   c) Schwächung des Magnetfelds B durch den zweiten magnetischen Pol, wodurch das elektrische Gerät (100) in einem zweiten Drehzahlbereich betrieben kann.

2. Verfahren nach Anspruch 1 **dadurch gekennzeichnet, dass** der zweite Drehzahlbereich im Schnitt mit höheren Drehzahlen verbunden ist als der erste Drehzahlbereich.

3. Verfahren nach Anspruch 1 oder 2 **dadurch gekennzeichnet, dass** der elektrische Strom I eine Flußstromkomponente I_d und eine momentbildende Komponente I_q aufweisen kann, wobei die Schwächung des Magnetfelds B durch eine negative Flußstromkomponente I_d erreicht wird.

4. Verfahren nach einem der vorhergehenden Ansprüche **dadurch gekennzeichnet, dass** das elektrische Gerät (100) nicht in einem MTPA-Punkt mit einem maximalen Drehmoment betrieben wird, wenn das elektrische Gerät (100) im zweiten Drehzahlbereich arbeitet.

5. Verfahren nach einem der vorhergehenden Ansprüche **dadurch gekennzeichnet, dass** Drehzahlen in einem Bereich von 4.000 bis 21.000 Umdrehungen pro Minute erreicht werden, bevorzugt Drehzahlen in einem Bereich von 4.200 bis 15.000 Umdrehungen pro Minute, besonders bevorzugt Drehzahlen in einem Bereich von 4.500 bis 10.000 Umdrehungen pro Minute und am meisten bevorzugt Drehzahlen in einem Bereich von 5.000 bis 8.000 Umdrehungen pro Minute.

6. Elektrisches Gerät (100) zur Durchführung des Verfahrens nach einem der vorhergehenden Ansprüche **dadurch gekennzeichnet, dass** ein Motor (12) des elektrischen Geräts (100) ein bürstenloser Motor ist.

7. Elektrisches Gerät (100) nach Anspruch 6 **dadurch gekennzeichnet, dass**

das elektrische Gerät (100) eine Werkzeugmaschine (10) oder ein Sauggerät (50) ist.

8. Elektrisches Gerät (100) nach einem der Ansprüche 6 oder 7 **dadurch gekennzeichnet, dass** der Motor (12) des elektrischen Geräts (100) mit Hilfe einer feldorientierten Regelung oder einer Blockkommutierung regelbar ist.

9. Elektrisches Gerät (100) nach einem der Ansprüche 6 bis 8 **dadurch gekennzeichnet, dass** das elektrische Gerät (100) eine Elektronik (18) aufweist, die dazu eingerichtet ist, einen elektrischen Strom I in einer Rotormagnetisierungsachse so zu manipulieren, dass ein Magnetfeld B geschwächt wird, so dass dadurch höhere Drehzahlen ermöglicht werden.

10. Elektrisches Gerät (100) nach einem der Ansprüche 6 bis 9 **dadurch gekennzeichnet, dass** das elektrische Gerät (100) eine Mensch-Maschine-Schnittstelle (24) zur Eingabe eines gewünschten Drehzahlbereichs aufweist.

**Fig. 1**

**Fig. 2**

**Fig. 3**

**Fig. 4**

100, 10

12

22    20

24

16

18    14

Europäisches Patentamt
European Patent Office
Office européen des brevets

# EUROPÄISCHER RECHERCHENBERICHT

Nummer der Anmeldung

EP 23 20 2007

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Bimal K. Bose: "Modern Power electronics and AC drives - part 2", , 30. Dezember 2002 (2002-12-30), XP055922861, Gefunden im Internet: URL:https://eee.sairam.edu.in/wp-content/uploads/sites/6/2019/07/Modern_power_electronics_and_AC_drives.pdf [gefunden am 2022-05-18] | 1-4,6 | INV. H02P21/00 B25F5/02 |
| Y | * Seiten 468-472; Abbildungen 9.22,9.24,9.26 * ----- | 5,7-10 | |
| Y | EP 3 731 408 A1 (BLACK & DECKER INC [US]) 28. Oktober 2020 (2020-10-28) * Absatz [0082] * ----- | 5 | |
| Y | WO 2023/064247 A1 (MILWAUKEE ELECTRIC TOOL CORP [US]) 20. April 2023 (2023-04-20) * Abbildung 3 * ----- | 7-9 | |
| A | WO 2023/137412 A1 (MILWAUKEE ELECTRIC TOOL CORP [US]) 20. Juli 2023 (2023-07-20) * Absatz [0003]; Abbildung 1 * ----- | 1-10 | RECHERCHIERTE SACHGEBIETE (IPC) H02P B25H B25F |
| Y | US 2020/055159 A1 (SAKAI HIRONORI [JP] ET AL) 20. Februar 2020 (2020-02-20) * Abbildung 4 * ----- | 10 | |

Der vorliegende Recherchenbericht wurde für alle Patentansprüche erstellt

| Recherchenort | Abschlußdatum der Recherche | Prüfer |
|---|---|---|
| München | 29. Februar 2024 | Schneider, Gernot |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

**EP 4 535 646 A1**

## ANHANG ZUM EUROPÄISCHEN RECHERCHENBERICHT
## ÜBER DIE EUROPÄISCHE PATENTANMELDUNG NR.

EP 23 20 2007

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-02-2024

| Im Recherchenbericht angeführtes Patentdokument | Datum der Veröffentlichung | Mitglied(er) der Patentfamilie | Datum der Veröffentlichung |
|---|---|---|---|
| EP 3731408 A1 | 28-10-2020 | EP 3731404 A1 | 28-10-2020 |
| | | EP 3731406 A1 | 28-10-2020 |
| | | EP 3731408 A1 | 28-10-2020 |
| | | US 2020343838 A1 | 29-10-2020 |
| | | US 2020343839 A1 | 29-10-2020 |
| | | US 2020343840 A1 | 29-10-2020 |
| | | US 2022329180 A1 | 13-10-2022 |
| | | US 2023361697 A1 | 09-11-2023 |
| WO 2023064247 A1 | 20-04-2023 | KEINE | |
| WO 2023137412 A1 | 20-07-2023 | KEINE | |
| US 2020055159 A1 | 20-02-2020 | CN 110475647 A | 19-11-2019 |
| | | EP 3603895 A1 | 05-02-2020 |
| | | JP 6708300 B2 | 10-06-2020 |
| | | JP 7036148 B2 | 15-03-2022 |
| | | JP 7392748 B2 | 06-12-2023 |
| | | JP 2020146837 A | 17-09-2020 |
| | | JP 2022079474 A | 26-05-2022 |
| | | JP WO2018180083 A1 | 11-07-2019 |
| | | US 2020055159 A1 | 20-02-2020 |
| | | WO 2018180083 A1 | 04-10-2018 |

EPO FORM P0461

Für nähere Einzelheiten zu diesem Anhang : siehe Amtsblatt des Europäischen Patentamts, Nr.12/82